(19) Europäisches Patentamt
European Patent Office
Office européen des brevets

(11) Veröffentlichungsnummer: **0 168 634**
**A1**

(12) # EUROPÄISCHE PATENTANMELDUNG

(21) Anmeldenummer: **85107237.1**

(22) Anmeldetag: **12.06.85**

(51) Int. Cl.⁴: **A 01 N 47/12**
// (A01N47/12, 43:42)

(30) Priorität: **15.06.84 DE 3422215**

(43) Veröffentlichungstag der Anmeldung: **22.01.86**
**Patentblatt 86/4**

(84) Benannte Vertragsstaaten: **DE FR GB IT**

(71) Anmelder: **BASF Aktiengesellschaft,**
**Carl-Bosch-Strasse 38, D-6700 Ludwigshafen (DE)**

(72) Erfinder: **Menck, Bernd-Heinrich, Dr., Waldstrasse 65, D-6706 Wachenheim (DE)**
Erfinder: **Kiessling, Ulrich, Dr., Caixa Postal 5187, BR-01000 Sao Paulo - SP (BR)**
Erfinder: **Unglaub, Walter, Diakonissenstrasse 42, D-6720 Speyer (DE)**
Erfinder: **Rosebrock, Henning, C.P.O. Box 1757, Tokyo 100-91 (JP)**

(54) **Herbizide Mittel auf der Basis von Dichlorchinolinderivaten.**

(57) Die Erfindung betrifft herbizide Mittel, die Wirkstoffmischungen aus Dichlorchinolinderivaten und S-(4-Chlorbenzyl)-N,N-diethylthiolcarbamat enthalten. Die herbiziden Mittel eignen sich zur Bekämpfung unerwünschten Pflanzenwuchses, vorzugsweise in Reis.

EP 0 168 634 A1

Herbizide Mittel auf der Basis von Dichlorchinolinderivaten

Die Erfindung betrifft herbizide Mittel, die Mischungen aus S-(4-Chlorbenzyl)-N,N-diethyl-thiolcarbamat und Dichlorchinolinderivaten enthalten, und Verfahren zur Bekämpfung unerwünschten Pflanzenwuchses mit diesen herbiziden Mitteln.

Es ist bekannt, daß Dichlorchinolinderivate sich zur Bekämpfung von grasartigen und breitblättrigen unerwünschten Pflanzen in Reis sowie verschiedenen anderen Kulturen eignen. Die Wirkung wird bei Behandlung der Unkräuter sowohl vor deren Auflauf als auch nach deren Auflauf erzielt (EP-A-60 429). Zur Verbreiterung des Wirkungsspektrums können diese Dichlorchinolinderivate zusammen mit herbiziden Wirkstoffen anderer Klassen ausgebracht werden, wobei als Mischungspartner Wirkstoffe aus allen bekannten Klassen, beispielsweise der Klasse der Diazine, Benzothiadiazinone, 2,6-Dinitroanilin, N-Methylcarbamate, N-Phenylcarbamte, Biscarbamate, Thiolcarbamate, Halogencarbonsäuren, Benzoesäurederivate, Terephthalate, Phenoxyfettsäuren, Triazine, Triazinone, Uracile, 2-Chloracetamide, 2-Chloracetanilide, Anilide, Benzonitrile, Diphenylether, Dinitrophenole, Harnstoffe, Dipyridiniumverbindungen, Cyclohexan-1,3-dione, Benzoxazinone, Benzofuranderivate, sowie aus anderen Klassen in Betracht kommen.

Als Vertreter für Thiolcarbamate, die gemeinsam mit den in der EP-A-60 429 offenbarten Dichlorchinolinderivaten ausgebracht werden können, ist S-(4-Chlorbenzyl)-N,N-diethyl-thiolcarbamat genannt. Dieses Thiolcarbamat eignet sich zur Bekämpfung von Gräsern in Reis (Herbicide Handbook of the Weed Science Society of America, 5 th Ed. 1983, S. 462; DE-A-1 817 662).

Die Anwendung dieses Wirkstoffs erfolgt im Vorauflauf- und frühen Nachauflaufverfahren (preemergence and early postemergence). Die üblichen Aufwandmengen erstrecken sich von 3,0 bis 4,0 kg Wirkstoff/ha. S-(4-Chlorbenzyl)-N,N-diethyl-thiolcarbamat wird auch in der EP-A-60 429 unter der großen Zahl von möglichen Mischungspartnern für Dichlorchinolinderivate genannt.

Es wurde gefunden, daß herbizide Mittel, die eine Mischung aus Dichlorchinolinderivaten der Formel I

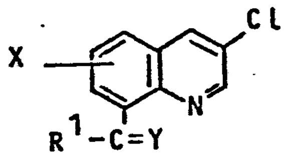

(I),

in der

X für Chlor in den Positionen 5, 6 oder 7 steht,

Y für Sauerstoff, Schwefel, Hydroxyimino, zwei Wasserstoffatome, zwei Chloratome oder die Gruppe =N-A-B steht, worin A eine direkte Bindung oder eine $CH_2$-Gruppe und B einen gegebenenfalls durch Chloratome, Nitro-, Methyl-, Trifluormethyl- oder Methoxygruppen substituierten Phenyl- oder Pyridinrest bedeuten, und

$R^1$ für Wasserstoff, Halogen oder Cyano, für die Gruppe $-NR^2R^3$, worin $R^2$ und $R^3$ gleich oder verschieden sind und Wasserstoff, $C_1$-$C_6$-Alkyl, $C_1$-$C_6$-Alkenyl, $C_1$-$C_6$-Hydroxyalkyl, Formyl, Cyclohexyl, Phenyl, Pyridinyl oder beide zusammen den Rest $-(CH_2)_4-$ oder $-(CH_2)_5-$, wobei eine $CH_2$-Gruppe durch ein Sauerstoff- oder Stickstoffatom oder eine $N-CH_3$-Gruppe ersetzt sein kann, bedeuten, für die Carboxylgruppe oder die Gruppe OM steht, worin M Wasserstoff, ein Metall der Gruppe 1A oder 2A des Periodensystems, $C_1$-$C_8$-Alkyl, einen gegebenenfalls durch Halogen, Nitro, $C_1$-$C_4$-Alky oder Trihalogenmethyl substituierten Phenylrest oder einen Rest $H_2\overset{\oplus}{N}R^2R^3$, in dem $R^2$ und $R^3$ die oben angegebenen Bedeutungen haben, bedeuten

oder in der die Gruppe $R^1$-C(=Y)- eine Nitrilgruppe bedeutet,

und

S-(4-Chlorbenzyl)-N,N-diethyl-thiolcarbamat enthalten, eine synergistische Wirkung bei der Bekämpfung von unerwünschten grasartigen und breitblättrigen Pflanzen haben, insbesondere bei der Bekämpfung grasartiger Pflanzen, wie Echinochloa-Arten. Mit den Mischungen lassen sich im Nachauflaufverfahren größere Stadien erfassen als es üblicherweise mit S-(4-Chlorbenzyl)-N,N-diethyl-thiolcarbamat möglich ist.

Bevorzugte Dichlorchinolinderivate der Formel I sind 3,7-Dichlorchinolinderivate. In diesen Chinolinderivaten bedeuten Y Sauerstoff, zwei Wasserstoffatome, zwei Chloratome oder die Gruppe =N-A-B, wobei A eine direkte Bindung und B eine gegebenenfalls durch Chloratome, Nitro-, Methyl-, Trifluormethyl- oder Methoxygruppen substituierten Pyridinrest, insbesondere einen unsubstituierten Pyridinrest bedeuten, und $R^1$ die Gruppe OM, wobei M für Wasserstoff, ein Metall der Gruppe 1Ades Periodensystems, vorzugsweise Natrium oder Kalium, unverzweigtes oder verzweigtes $C_1$-$C_8$-Alkyl, vorzugsweise unverzweigtes oder verzweigtes $C_1$-$C_4$-Alkyl steht, Wasserstoff, Halogen, insbesondere Chlor oder Jod, oder die Gruppe $-NR^2R^3$,

wobei $R^2$ und $R^3$ gleich oder verschieden sind und Wasserstoff, $C_1$-$C_6$-Alkyl, vorzugsweise $C_1$-$C_4$-Alkyl, insbesondere Methyl, und $R^2$ und $R^3$ zusammen den Rest $-(CH_2)_5-$, in dem eine $CH_2$-Gruppe durch Sauerstoff ersetzt sein kann, vorzugsweise $-(CH_2)_2-O-(CH_2)_2-$, bedeuten, oder einen Rest $H_2\overset{\oplus}{N}R^2R^3$, wobei $R^2$ und $R^3$ gleich oder verschieden sind und Wasserstoff, $C_1$-$C_6$-Alkyl, vorzugsweise $C_1$-$C_4$-Alkyl, insbesondere Methyl, oder $C_1$-$C_6$-Hydroxyalkyl, vorzugsweise $C_1$-$C_4$-Hydroxyalkyl, insbesondere 2-Hydroxyethyl, bedeuten.

Insbesondere bevorzugt sind 3,7-Dichlor-8-carboxy-chinolin, Salze dieser Verbindung, beispielsweise das 2-Hydroxyethyl-ammoniumsalz, das Di-(2--hydroxyethyl)-ammoniumsalz, das Dimethylammoniumsalz sowie das Natriumsalz, Ester dieser Verbindung, wie $C_1$-$C_8$-Alkylester, insbesondere $C_1$-$C_4$-Alkylester, beispielsweise 3,7-Dichlor-8-methoxycarbonylchinolin, 3,7-Dichlor-8-ethoxycarbonylchinolin, 3,7-Dichlor-8-(n-propoxy-carbonyl)--chinolin, 3,7-Dichlor-8-(t-butoxy-carbonyl)chinolin, sowie 3,7-Dichlor--8-formylchinolin, 3,7-Dichlor-8-dichlormethyl-chinolin, 3,7-Dichlorchinolin-8-yl-methyl-N-(pyrid-2-yl)-imin, 3,7-Dichlor-8-(tert.-butylaminocarbonyl)chinolin.

Das Mischungsverhältnis der Komponenten kann in weiten Bereichen schwanken. Die Wahl des Mischungsverhältnisses hängt in erster Linie vom Spektrum der zu bekämpfenden Pflanzen sowie vom Entwicklungsstadium der zu bekämpfenden Pflanzen, in Reisfeldern gegebenenfalls auch von der Wasserführung ab. Zweckmäßig liegt das Mischungsverhältnis von Dichlorchinolinderivat der Formel I zu S-(4-Chlorbenzyl)-N,N-diethyl-thio-carbamat zwischen 1 : 1 und 1 : 50, vorzugsweise zwischen 1 : 3 und 1 : 30 und insbesondere zwischen 1:6 und 1:20.

Die erforderliche Aufwandmenge an reiner Wirkstoffmischung ohne Formulierungshilfsmittel ist abhängig von der Zusammensetzung des Pflanzenbestandes, dessen Entwicklungsstadium, den klimatischen Verhältnissen des Einsatzortes, in Reisfeldern auch von der Wasserführung sowie von den Anwendungstechniken. Im allgemeinen betragen die Aufwandmengen 1 bis 5 kg, vorzugsweise 2 bis 4 kg Wirkstoff/ha.

Als Kulturen, in denen die erfindungsgemäßen herbiziden Mittel über das Blatt angewandt werden können, kommen im wesentlichen diejenigen in Betracht, in denen die Dichlorchinolinderivate der Formel I und das Thiolcarbamat eingesetzt werden können, beispielsweise Reis unter den in den jeweiligen Ländern und Regionen üblichen Anbautechniken.

Die erfindungsgemäßen Mittel werden beispielsweise in Form von direkt versprühbaren Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet. Die Anwendungsformen richten sich ganz nach den Verwendungszwecken; sie sollten in jedem Fall möglichst die feinste Verteilung der erfindungsgemäßen Wirkstoffmischungen gewährleisten.

Zur Herstellung von direkt versprühbaren Lösungen, Emulsionen, Pasten und Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate, Methanol, Ethanol, Propanol, Butanol, Chloroform, Tetrachlorkohlenstoff, Cyclohexanol, Cyclohexanon, Chlorbenzol, Isophoron, stark polare Lösungsmittel, wie Dimethylformamid, Dimethylsulfoxid, N-Methylpyrrolidon oder Wasser, in Betracht.

Wäßrige Anwendungsformen können aus Emulsionskonzentraten, Pasten oder netzbaren Pulvern (Spritzpulvern), Öldispersionen durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctylphenol, Octylphenol, Nonylphenol, Alkylphenolpolyglykolether, Tributylphenolpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose in Betracht.

Die Formulierungen enthalten zwischen 0,1 und 95 Gew.%, vorzugsweise zwischen 0,5 und 90 Gew.%, Wirkstoffmischung.

Die erfindungsgemäßen herbiziden Mittel können zusätzlich mit zahlreichen Vertretern weiterer herbizider oder wachstumsregulierender Wirkstoffgruppen gemischt und gemeinsam ausgebracht werden. Beispielsweise kommen als Mischungskomponenten Diazine, 4H-3,1-Benzoxazinderivate, Benzothiadiazinone, 2,6-Dinitroaniline, Phenoxycarbonsäuren, Triazine, Chloracetanilide und Diphenylether in Betracht. Solche Kombinationen dienen zur weiteren Verbreiterung des Wirkungsspektrums.

Außerdem ist es nützlich, die erfindungsgemäßen Mischungen auch noch mit weiteren Pflanzenschutzmitteln gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralstofflösungen, welche zur Behebung von Ernährungs- und Spurenelementmängeln eingesetzt werden.

Die biologische Wirkung der erfindungsgemäßen Mittel wird durch Freilandversuche belegt. Dabei handelt es sich um Kleinparzellenversuche in Reisanbaugebieten. Als Kultur dient gesäter Reis (Oryza sativa) in angestautem Wasser (paddy) mit natürlich vorkommenden unerwünschten Gräsern wie Echinochloa spp. (Hühnerhirse), (Echinochloa crus-galli, Echinochloa colonum) und an Aeschynomene rudis als Vertreter breitblättriger unerwünschter Pflanzen. Die Wirkstoffe werden einzeln und in Mischungen in Wasser als Träger- und Verteilermedium emulgiert bzw. suspendiert. Die Ausbringung erfolgt dann von Hand mit Hilfe von Spritzgeräten im Nachauflaufverfahren bei verschiedenen Stadien der Testpflanzen. Der Beobachtungszeitraum erstreckt sich über mehrere Wochen. Bewertet wird nach einer Skala von 0 bis 100. Dabei bedeutet 0 keine Schädigung oder normaler Auflauf und 100 kein Aufgang der Pflanzen bzw. völlige Zerstörung zumindest der oberirdischen Sproßteile.

Verwendet werden beispielsweise die Wirkstoffe 3,7-Dichlor-8-carboxy--chinolin (Wirkstoff A) und S-(4-Chlorbenzyl)-N,N-diethylthiol-carbamat (Wirkstoff B) sowie Mischungen aus diesen Wirkstoffen.

Die Ergebnisse in den folgenden Tabellen zeigen die starke überadditive Wirkung der Mischungen am Beispiel von Echinochloa spp., welche im 2. bis

3. Blattstadium behandelt wurde, sowie an Echinochloa colonum und Aeschynomene rudis.

Tabelle 1

| Wirkstoff | Aufwandmenge [kg Wirkstoff/ha] | Testpflanzen und Schädigung [%] Reis (gesät) | Echinochloa crus-galli |
|---|---|---|---|
| A | 0,125 | 0 | 43 |
| | 0,25 | 0 | 78 |
| | 0,5 | 0 | 90 |
| B | 1,5 | 0 | 23 |
| | 2,4 | 0 | 20 |
| A + B | 0,125 + 2,4 | 0 | 90 |
| | 0,25 + 2,4 | 0 | 93 |
| | 0,25 + 1,5 | 0 | 92 |

Tabelle 2

| Wirkstoff | Aufwandmenge [kg Wirkstoff/ha] | Testpflanzen und Schädigung [%] Echinochloa colonum | Aeschynomene rudis |
|---|---|---|---|
| A | 0,125 | 20 | 17 |
| | 0,25 | 23 | 37 |
| | 0,5 | 73 | 67 |
| A + B | 0,125 + 2,4 | 85 | 90 |
| | 0,25 + 2,4 | 99 | 99 |

Ähnliche günstige Ergebnisse wurden auch in anderen Versuchen erhalten, die in den Tabellen 3 und 4 wiedergegeben sind.

Tabelle 3

| Wirkstoff | Aufwandmenge [kg Wirkstoff/ha] | Testpflanzen und Schädigung [%] Oryza sativa (seeded) I* | II* | Echinochloa crus-galli I | II |
|---|---|---|---|---|---|
| A | 0,5 | 0 | 0 | 40 | 73 |
| B | 4,0 | 17 | 17 | 53 | 43 |
| A + B | 0,25 + 2,0 | 0 | 8 | 70 | 98 |
| | 0,5 + 4,0 | 12 | 8 | 65 | 100 |

* I = Anfangsbewertung
II = Endbewertung

Tabelle 4

| Wirkstoff | Aufwandmenge [kg Wirkstoff/ha] | Testpflanzen und Schädigung [%] Oryza sativa (seeded) I* | II* | Echinochloa crus-galli I | II |
|---|---|---|---|---|---|
| A | 0,25 | 0 | 0 | 57 | 85 |
| B | 3,0 | 3 | 0 | 57 | 33 |
| A + B | 0,25 + 1,5 | 0 | 0 | 73 | 97 |
| | 0,25 + 0,25 | 0 | 0 | 87 | 100 |
| | 0,375 + 2,5 | 0 | 0 | 88 | 100 |

* I = Anfangsbewertung
II = Endbewertung

Patentansprüche

1. Herbizide Mittel, enthaltend eine Mischung aus einem Dichlorchinolinderivat der Formel I

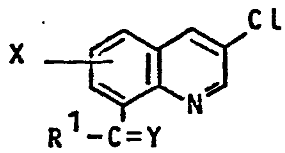

(I),

in der

X für Chlor in den Positionen 5, 6 oder 7 steht,

Y für Sauerstoff, Schwefel, Hydroxyimino, zwei Wasserstoffatome, zwei Chloratome oder die Gruppe =N-A-B steht, worin A eine direkte Bindung oder eine $CH_2$-Gruppe und B einen gegebenenfalls durch Chloratome, Nitro-, Methyl-, Trifluormethyl- oder Methoxygruppen substituierten Phenyl- oder Pyridinrest bedeuten, und

$R^1$ für Wasserstoff, Halogen oder Cyano, für die Gruppe $-NR^2R^3$, worin $R^2$ und $R^3$ gleich oder verschieden sind und Wasserstoff $C_1$-$C_6$-Alkyl, $C_1$-$C_6$-Alkenyl, $C_1$-$C_6$-Hydroxyalkyl, Formyl, Cyclohexyl, Phenyl, Pyridinyl oder beide zusammen den Rest $-(CH_2)_4-$ oder $-(CH_2)_5-$, wobei eine $CH_2$-Gruppe durch ein Sauerstoff- oder Stickstoffatom oder eine $N-CH_3$-Gruppe ersetzt sein kann, bedeuten, für die Carboxylgruppe oder die Gruppe OM steht, worin M Wasserstoff, ein Metall der Gruppe 1A oder 2A des Periodensystems, $C_1$-$C_8$-Alkyl, einen gegebenenfalls durch Halogen, Nitro, $C_1$-$C_4$-Alkyl oder Trihalogenmethyl substituierten Phenylrest oder einen Rest $H_2\overset{\oplus}{N}R^2R^3$, in dem $R^2$ und $R^3$ die oben angegebenen Bedeutungen haben, bedeuten

oder in der die Gruppe $R^1-\overset{Y}{C}-$ eine Nitrilgruppe bedeutet,

und

S-(4-Chlorbenzyl)-N,N-diethyl-thiolcarbamat.

2. Herbizide Mittel nach Anspruch 1, dadurch gekennzeichnet, daß sie als Dichlorchinolinderivat der Formel I 3,7-Dichlor-8-carboxy-chinolin, ein Salz oder einen $C_1$-$C_8$-Alkylester dieser Verbindung enthalten.

3. Herbizide Mittel nach Anspruch 1, dadurch gekennzeichnet, daß das Mischungsverhältnis Dichlorchinolinderivat der Formel I zu S-(4-Chlorbenzyl)-N,N-diethyl-thiolcarbamat 1 : 1 bis 1 : 50 Gewichtsteile beträgt.

4. Herbizide Mittel nach Anspruch 1, dadurch gekennzeichnet, daß das Mischungsverhältnis Dichlorchinolinderivat der Formel I zu S-(4-Chlorbenzyl)-N,N-diethyl-thiolcarbamat 1 : 3 bis 1 : 30 beträgt.

5. Verfahren zur Bekämpfung unerwünschten Pflanzenwuchses, dadurch gekennzeichnet, daß man die Pflanzen nach dem Auflaufen mit herbiziden Mitteln gemäß Anspruch 1 behandelt.

6. Verfahren nach Anspruch 5, dadurch gekennzeichnet, daß die Aufwandmenge an Wirkstoffmischung in Form der herbiziden Mittel 1 bis 5 kg/ha beträgt.

Europäisches Patentamt

# EUROPÄISCHER RECHERCHENBERICHT

0168634

Nummer der Anmeldung

EP 85 10 7237

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| D,A | EP-A-0 060 429 (BASF)<br>* Seite 22, Zeilen 1-14; Seite 25, Zeile 15; Seite 36, Zeile 27 - Seite 38, Zeile 21; Patentansprüche 1-6 *<br>--- | 1,2,5,6 | A 01 N 47/12 //<br>(A 01 N 47/12<br>A 01 N 43:42 ) |
| D,A | DE-A-1 817 662 (KUMAI CHEMICAL IND.)<br>* Seite 3, Zeile 24 - Seite 4, Zeile 3; Patentansprüche 1,2,5,7,9-11 *<br>--- | 1,2,5,6 | |
| A | CHEMICAL ABSTRACTS, Band 96, Nr. 19, 10. Mai 1982, Seite 275, Nr. 157410p, Columbus, Ohio, US; & JP - A - 82 14 508 (NISSAN CHEMICAL INDUSTRIES, LTD.) 25.01.1982<br>* Insgesamt *<br>----- | 1-6 | RECHERCHIERTE SACHGEBIETE (Int. Cl.4)<br>A 01 N |

Der vorliegende Recherchenbericht wurde für alle Patentansprüche erstellt.

| Recherchenort | Abschlußdatum der Recherche | Prüfer |
|---|---|---|
| DEN HAAG | 23-09-1985 | FLETCHER A.S. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82